# EUROPÄISCHE PATENTANMELDUNG

(11) **EP 1 637 762 A2**
(43) Veröffentlichungstag der Anmeldung: **22.03.2006**
(21) Anmeldenummer: 05019012.3
(22) Anmeldetag: 01.09.2005
(51) Int. Cl.: F16D 69/04

(54) **Bremsenträger**

(30) Priorität: 17.09.2004 DE 102004045223
(71) Anmelder: Wabco Radbremsen GmbH, 68229 Mannheim (DE)
(72) Erfinder: Kloos, Eugen, 64625 Bensheim (DE); Blatt, Peter, 69509 Mörlenbach (DE); Steinmetz, Andreas, 76889 Gleishorbach (DE); Keller, Marcus, 69469 Weinheim (DE); Harder, Markus, 68766 Hockenheim (DE)
(74) Vertreter: Leinweber & Zimmermann

(57) **Zusammenfassung**

Die Erfindung betrifft einen Bremsenträger für eine Scheibenbremse, mit
einer ersten Drehsicherungseinrichtung (32) zum Sichern eines Bremsbelages und/oder einer Druckplatte der Scheibenbremse gegen ein Mitdrehen mit der Bremsscheibe und
einer zweiten Drehsicherungseinrichtung (16) zum Sichern des Bremsenträgers gegen ein Mitdrehen mit der Bremsscheibe.

Erfindungsgemäß ist vorgesehen, daß die erste und die zweite Drehsicherungseinrichtung (32,16) an einem Ansatz (22,24) auf der bremsscheibenabgewandten Seite des Bremsenträgers (12) angeordnet sind.

## Beschreibung

Die Erfindung betrifft einen Bremsenträger für eine Scheibenbremse, mit
einer ersten Drehsicherungseinrichtung zum Sichern eines Bremsbelages und/oder einer Druckplatte der Scheibenbremse gegen ein Mitdrehen mit der Bremsscheibe und
einer zweiten Drehsicherungseinrichtung zum Sichern des Bremsenträgers gegen ein Mitdrehen mit der Bremsscheibe.

Dabei befaßt sich die Erfindung insbesondere mit der lösbaren Verbindung/Befestigung eines Bremssattels der Scheibenbremse über sein Trägerteil (Bremsenträger) an einem achsseitigen Träger (Flanschteil) mittels axialer Verschraubung, d.h. mit einer Verschraubung axial zur Bremsen- bzw. Radachse. Als Bremsen kommen insbesondere in Betracht: Gleitsattel-, Pendelsattel- und Festsattelbremsen, insbesondere für Nutzfahrzeuge.

Die Flanschteile des Bremsenträgers und des achsseitigen Trägers bilden mithin eine Schnittstelle zwischen dem momentabgebenden Bremsenträger einerseits und dem momentaufnehmenden achsseitigen Träger andererseits. Dabei sind insbesondere im wesentlichen ebene Anlageflächen vorgesehen, die aneinander anliegen. Diese Anlageflächen werden mittels der erwähnten Verschraubung miteinander verschraubt.

Da insbesondere bei Nutzfahrzeugen große Momente übertragen werden müssen, sind zur Vermeidung von Verspannungen/Verziehen/Lösen materialaufwendige und dementsprechend große Verbindungsflächen vorgesehen, die über eine Mehrzahl von Verschraubungen mit sehr hohen Anziehdrehmomenten miteinander verbunden werden. Dabei werden Vier- bis Sechsfach-Verschraubungen in Axialrichtung eingesetzt. Diese Verschraubungen dienen unter anderem dazu, ein Gegenmoment gegen die Materialverwindung (Biegemomente durch Bremsmomente) in der Bremse zu erzeugen. Darüber hinaus dienen sie dazu, einen Kraftschluß zwischen den beiden Flanschteilen herzustellen.

Mit anderen Worten stellen die Verschraubungen die oben erwähnte zweite Drehsicherungseinrichtung zum Sichern des Bremsenträgers gegen ein Mitdrehen mit der Bremsscheibe dar.

Auch eine Druckplatte einer Scheibenbremse muß gegen ein Mitdrehen mit der Bremsscheibe gesichert sein. Dazu wird bei bekannten Scheibenbremsen die Druckplatte beispielsweise in den Bremsenträger "eingehängt".

Die herkömmlichen Bremsen sind jedoch zum einen materialaufwendig und zum anderen vergleichsweise kompliziert.

Der Erfindung liegt daher die Aufgabe zugrunde, den Bremsenträger der eingangs genannten Art derart weiterzubilden, daß Material und damit Gewicht eingespart wird, die im Fahr- und Bremsbetrieb auftretenden Kräfte jedoch zuverlässig aufgenommen werden. Ferner sollte der Bremsenträger einfach im Aufbau sein.

Erfindungsgemäß wird die gestellte Aufgabe dadurch gelöst, daß die erste und die zweite Drehsicherungseinrichtung an einem Ansatz auf der bremsscheibenabgewandten Seite des Bremsenträgers angeordnet sind.

Mit anderen Worten wird erfindungsgemäß ein Ansatz eingeführt, der zwei Funktionen gleichzeitig erfüllt. Er trägt nämlich einerseits zur Drehsicherung der Druckplatte und andererseits zur Drehsicherung des Bremsenträgers selbst bei. Selbstverständlich können zusätzlich die erwähnten Verschraubungen vorgesehen sein. In jedem Fall dient aber der Ansatz dazu, zumindest einen Teil der Bremsenumfangskräfte in den achsseitigen Träger einzuleiten, weshalb die Verschraubungen kleiner dimensioniert werden können. Damit einher geht eine Materialersparnis und eine entsprechende Gewichtsersparnis. Darüber hinaus wird der Bremsenträger stark vereinfacht, weil der Ansatz eine Doppelfunktion erfüllt.

Erfindungsgemäß bevorzugt ist vorgesehen, daß die zweite Drehsicherungseinrichtung ein Widerlager bildet, das parallel zur Radialrichtung und/oder zur Tangentialrichtung der Bremsscheibe wirkt. Dadurch können die Bremsumfangskräfte in optimaler Weise an den achsseitigen Träger abgeleitet werden, wodurch die Belastung der Verschraubungen entsprechend sinkt.

Erfindungsgemäß weiter bevorzugt weist der Bremsenträger mindestens eine Ausnehmung für eine parallel zur Bremsscheibenachse ausgerichtete Befestigungsschraube auf, beispielsweise eine Gewindebohrung.

Da die Bremsumfangskräfte von der zweiten Drehsicherungseinrichtung in den achsseitigen Träger eingeleitet werden, kann die Ausnehmung eine im Vergleich mit dem Durchmesser der Befestigungsschraube größere Weite haben, was die Anbringung des Bremsenträgers an dem achsseitigen Träger vereinfacht.

Erfindungsgemäß bevorzugt ist vorgesehen, daß die zweite Drehsicherungseinrichtung gegen ein Drehen um eine Achse sichert, die außerhalb der Ausnehmung liegt. Dadurch stellt sich insgesamt eine große und eventuell auftretenden Verformungsmomenten entgegenwirkende Hebellänge ein.

Nach einer besonders bevorzugten Ausführungsform der Erfindung weist die zweite Drehsicherungseinrichtung zwei L-förmig zueinander ausgerichtete Anschlagflächen auf. Dadurch werden die Steifigkeit und die Sicherheit beim Bremsen erhöht, weil eine besonders verläßliche Drehsicherungseinrichtung geschaffen ist, die ein Gegenmoment gegen ungewolltes Lösen der Verschraubung(en) bei Verziehen bewirkt. Ein solches Lösen der Verschraubung(en) könnte ansonsten insbesondere im Hinblick auf reversierenden Bremsbetrieb auftreten.

Insgesamt ist es nicht nur möglich, entweder die Anzahl der Verschraubungen zu verringern oder geringere Schraubendurchmesser bzw. Festigkeiten zu verwenden, sondern es muß auch sonst insgesamt nur wenig Material eingesetzt werden. Darüber hinaus ist der Bremsenträger stark vereinfacht.

Bevorzugt weist die erste Drehsicherungseinrichtung eine Führungsnut auf, die bezüglich einer Drehachse der Bremsscheibe schräg angestellt ist. Sie liegt dabei insbesondere bei Vorwärtsfahrt auf der Bremsscheibeneinlaufseite. Mithin ist sie schräg gegen den Bremsscheibeneinlauf angestellt. Dadurch ist auch die Druckplatte schräg verlaufend abgestützt. Sie wird beim Bremsen also gezogen.

Bei Rückwärtsfahrt dient die auf der Scheibeneinlaufseite liegende Flanke der Führungsnut zur Abstützung der Druckplatte. Mit anderen Worten begrenzt diese Nutflanke eine übermäßige Seitenbewegung der Druckplatte, weil sie wie ein schräg verlaufender Anschlag für die Druckplatte wirkt.

Weiter ist erfindungsgemäß bevorzugt ein Anschlag zur Begrenzung einer Verschiebung eines Bremssattels in Axialrichtung der Bremsscheibe vorgesehen. Ein solcher Anschlag dient dazu, den Bremssattel daran zu hindern, eine Schutzkappe eines Gleitbolzens entweder zu zerquetschen oder aus der Halterung zu heben, je nachdem, in welche Richtung der Bremssattel übermäßig verschoben werden könnte. Diese übermäßige Verschiebung wird durch den erfindungsgemäßen Anschlag begrenzt.

Dabei dient ein Ansatz erfindungsgemäß weiter bevorzugt zur Begrenzung einer Verschiebung eines Bremssattels in beiden Richtungen entlang einer Drehachse der Bremsscheibe. Mit anderen Worten wird erfindungsgemäß bevorzugt eine übermäßige Verschiebung in beiden Richtungen unterbunden, um beispielsweise eine Schutzkappe sowohl vor dem Zerquetschen als auch vor dem Ausheben aus ihrer Halterung zu schützen.

Nach einer besonders bevorzugten Ausführungsform der Erfindung sind mindestens zwei Ansätze vorgesehen, die symmetrisch zueinander liegen, also beispielsweise ein solcher Ansatz auf der Scheibeneinlaufseite und einer auf der Scheibenauslaufseite.

Neben dem oben beschriebenen Bremsenträger schafft die Erfindung auch eine Scheibenbremse mit einem solchen Bremsenträger, insbesondere für Nutzfahrzeuge.

Schließlich ist erfindungsgemäß bevorzugt ein Druck- und/oder Spannungssensor als Meßaufnehmer für die auf den Bremsenträger wirkenden Belastungen vorgesehen. Durch Ermittlung der Pressungen/Materialspannungen/Verformungen kann entweder eine Auswertung/Steuerung der anliegenden und abzuleitenden Bremsmomente/Zuspannkräfte erfolgen. Ein solcher Sensor kann aber auch als Signalgeber dienen, wenn Druck- oder Spannungsabweichungen von einem Sollwert eine Störung in der Bremse signalisieren.

Der Sensor liegt bevorzugt an einer Kontaktfläche zu einer Achsanordnung.

Im folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: eine schematische Schnittansicht eines an einer Achsanordnung angebrachten Bremsenträgers nach einem Ausführungsbeispiel der Erfindung,
- Figur 2: die gleiche Ansicht wie Figur 1, jedoch von einem herkömmlichen Bremsenträger,
- Figur 3: eine schematische perspektivische Ansicht eines bevorzugten Ausführungsbeispiels des erfindungsgemäßen Bremsenträgers,
- Figur 4: eine schematische perspektivische Ansicht eines an einen Achsflansch angebrachten Bremsenträgers nach einem weiter bevorzugten Ausführungsbeispiel der Erfindung,
- Figur 5: eine weitere perspektivische Ansicht des Bremsenträgers nach Figur 4,
- Figur 6: eine schematische perspektivische Ansicht noch einer weiteren Ausführungsform des erfindungsgemäßen Bremsenträgers an einem Achsflansch,
- Figur 7: eine andere perspektivische Ansicht des Bremsenträgers nach Figur 6,
- Figuren 8 bis 10: Schnittansichten einer Einzelheit in drei verschiedenen Ausgestaltungen,
- Figur 11: eine schematische Explosionsdarstellung des Bremsenträgers zusammen mit anderen Funktionsteilen einer Bremse und
- die Figuren 12 und 13: schematische perspektivische Ansichten von Bremsenteilen in unterschiedlichen Betriebszuständen.

Gemäß Figur 2 (herkömmliche Bremsenträger) dienen lediglich Befestigungsschrauben 10 zum Befestigen eines Bremsenträgers 12 an einem Achsteil 14. Die Befestigungsschraube 10 dient dabei gleichzeitig auch als Drehsicherungseinrichtung gegen ein Mitdrehen des Bremsenträgers 12 mit der (nicht gezeigten) Bremsscheibe.

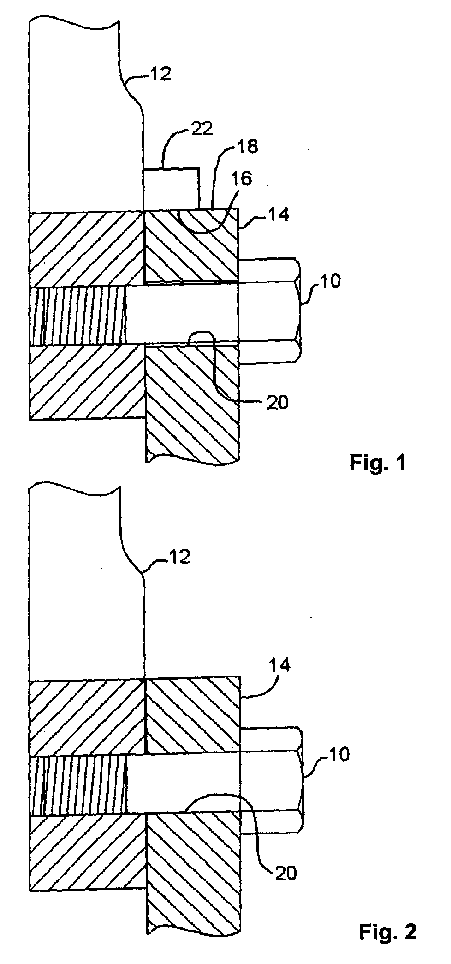

Demgegenüber ist bei dem Ausführungsbeispiel der Erfindung nach Figur 1 ein Ansatz 22 an dem Bremsenträger 12 vorgesehen, der als Drehsicherungseinrichtung dient, weil er mit seiner Unterseite 16 an der Oberseite 18 des Achsteils 14 anliegt. Daher kann eine Ausnehmung 20 in dem Achsteil 14 zum Aufnehmen der Befestigungsschraube 10 größer sein als die Abmessungen der Befestigungsschraube 10, wodurch die Gesamtmontage erheblich erleichtert ist.

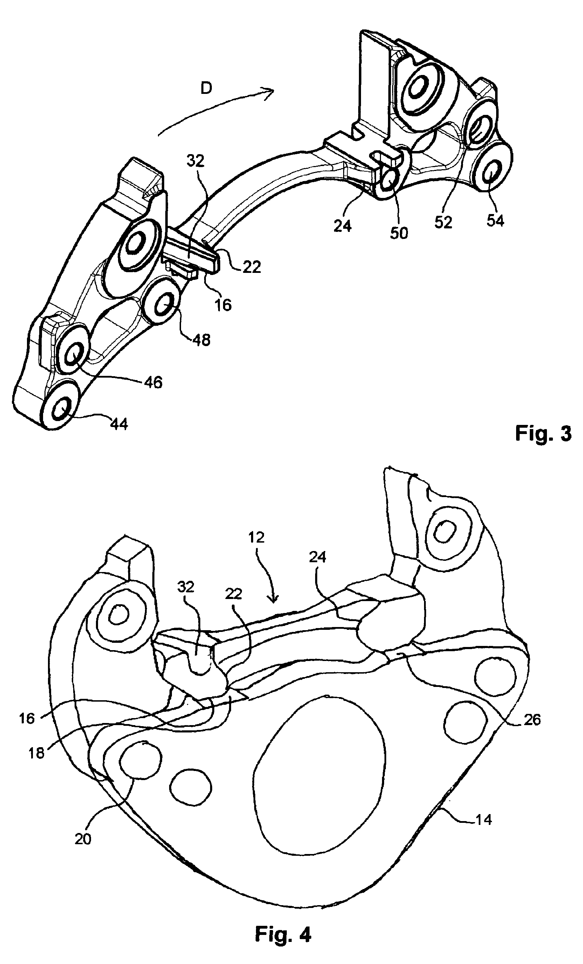

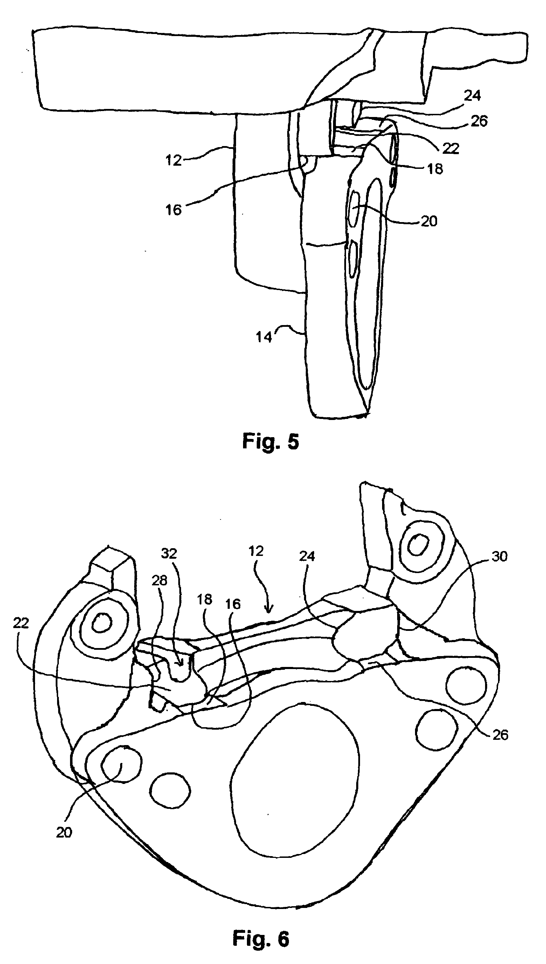

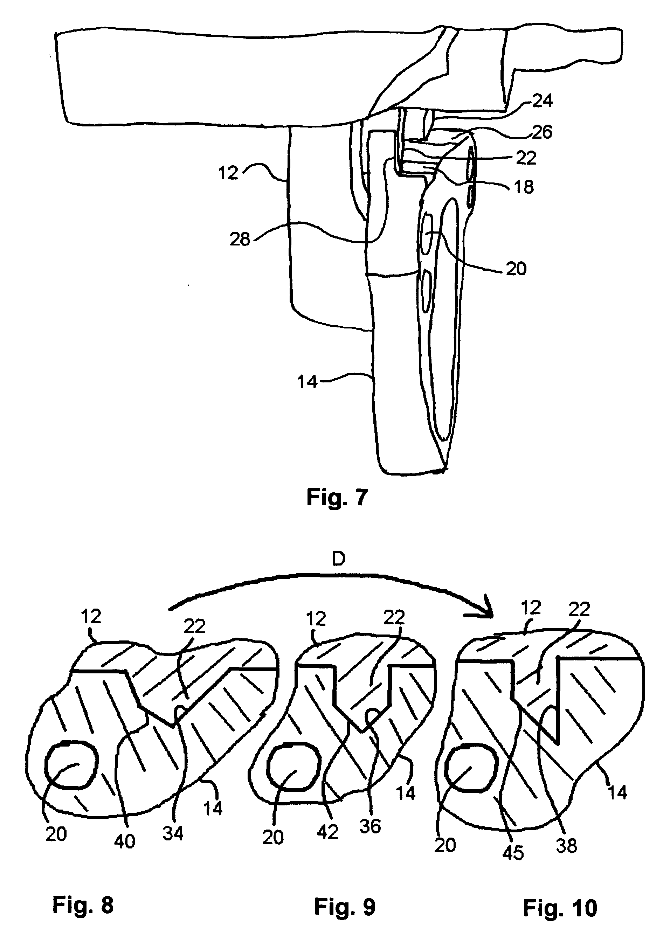

Bei den in der Zeichnung dargestellten Ausführungsbeispielen ist der Bremsenträger 12 jeweils mit zwei Ansätzen 22, 24 versehen. Die Ansätze 22, 24 liegen jeweils an Stützflächen 18, 26 an, wodurch der Bremsenträger an einem Mitdrehen mit der Bremsscheibe gehindert ist. Diese Stützflächen 18 und 26 sind im wesentlichen horizontal ausgerichtet. Die Ausgestaltung nach den Figuren 6 und 7 unterscheidet sich von derjenigen nach den Figuren 4 und 5 insbesondere dadurch, daß die Ansätze 22, 24 nicht nur an den Stützflächen 18, 26, sondern vielmehr auch an weiteren Stützflächen 28, 30 zur Drehsicherung anliegen. Die Stützflächenpaare 18, 28 und 26, 30 fassen mithin die Ansätze 22, 24 L-förmig ein, weil sie im wesentlichen senkrecht zueinander stehen. Dadurch, daß der bzw. die Ansätze 22, 24 gegenüber der Bremsenachse oberhalb und dieser auch näher gegenüber den Ausnehmungen 20 liegen, werden entsprechend große Hebel den Verformungsmomenten sowohl bei Vorwärts- als auch bei Rückwärtsbremsungen entgegengesetzt. Dies führt zur weiteren Stabilisierung und auch zur Entlastung der Axialverschraubungen 10.

Zumindest an dem Ansatz 22 ist eine Führungsnut 32 ausgebildet, die als Drehsicherungseinrichtung gegen ein Mitdrehen einer in dem Bremsenträger gelagerten Druckplatte 4 dient. Damit kommt dem Ansatz 22 eine Doppelfunktion zu, nämlich einerseits Drehsicherung des Bremsenträgers 12 und andererseits Drehsicherung der Druckplatte 4. Durch diese Doppelfunktion des Ansatzes 22 wird der Bremsenträger insgesamt im Aufbau einfach. Darüber hinaus wird Material eingespart.

Wenngleich dies den Figuren nicht zu entnehmen ist, so kann doch auch der Ansatz 24 eine der Führungsnut 32 entsprechende Nut zum Einhängen der Druckplatte 4 aufweisen. Dadurch wäre der Bremsenträger 12 in einer rechts im Fahrzeug liegenden Bremse und in einer links im Fahrzeug liegenden Bremse einsetzbar.

Den Figuren 8 bis 10 sind weitere Ausgestaltungen für das Zusammenspiel zwischen dem Ansatz 22, 24 (nur Ansatz 22 ist gezeigt) und dem Achsteil 14 zu entnehmen. Danach ist in dem Achsteil 14 eine Nut 34, 36, 38 ausgebildet, in die der Ansatz 40, 42, 45 mit der Nut entsprechender Außenkontur eingreift. Die Ausgestaltungen nach den Figuren 8 bis 10 bieten daher eine besonders hohe Sicherheit gegen ein Mitdrehen des Bremsenträgers mit der Bremsscheibe sowohl bei Vorwärts- als auch bei Rückwärtsbremsungen. Die Drehrichtung der Bremsscheibe bei Vorwärtsbewegung ist mit D angegeben. Die Schrägnut 32 ist in den Figuren 8 bis 10 nicht gezeigt.

Bei den Ausgestaltungen nach den Figuren 4 bis 7 sind jeweils vier Ausnehmungen für vier Befestigungsschrauben an dem Achsteil 14 vorgesehen, von denen jeweils eine mit der Bezugszahl 20 bezeichnet ist. Demgegenüber sieht die Ausgestaltung nach Figur 3 eine Sechsfach-Verschraubung vor. Entsprechende Ausnehmungen sind mit den Bezugszahlen 44, 46, 48, 50, 52 und 54 bezeichnet. Prinzipiell ist die Zahl der Ausnehmungen beliebig. Sie ist jeweils auf den konkreten Anwendungsfall abgestimmt und entspricht in der Regel der Zahl der Schrauben 10.

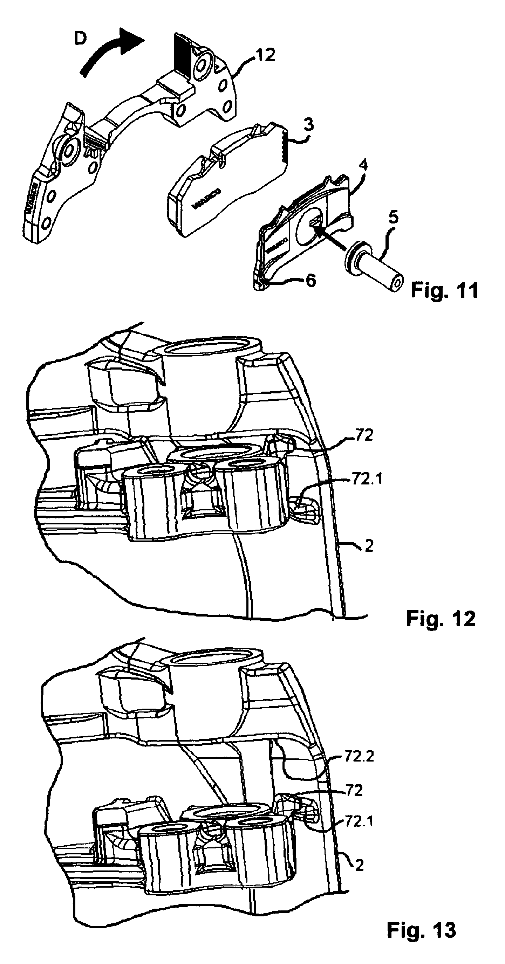

Wie Figur 11 zu entnehmen ist, dient der Bremsenträger 12 zum Halten bzw. Tragen eines Bremsbelages 3 und einer Druckplatte 4, gegen die beim Bremsen ein Zuspannstößel 5 drückt.

Den Figuren 12 und 13 ist darüber hinaus zu entnehmen, daß der Bremsenträger 12 auch einen Bremssattel 2 hält bzw. trägt und führt.

In Figur 11 erkennt man an der Druckplatte 4 einen Ansatz 6, mit dem die Druckplatte in die Führungsnut 32 eingehängt wird.

Wie insbesondere den Figuren 3, 12 und 13 zu entnehmen ist, weist der Bremsenträger 12 zwei Ansätze 72, 74 auf. Diese beiden Ansätze 72, 74 bilden auf ihrer der Bremsscheibe zugewandten Seite jeweils einen Anschlag 76, 78. Die Anschläge 76, 78 liegen derart, daß der Bremssattel 2, der die Bremsscheibe rahmenförmig übergreift, bei einer übermäßigen Verschiebung in Richtung Zuspannseite begrenzt ist, weil er an den Anschlägen 76, 78 anschlägt. Dadurch wird verhindert, daß Schutzkappen von Gleitbolzen in Gleitbolzenlagerungen 56, 58 abgehoben werden. Einem ähnlichen Zweck dienen Anschläge 80, 82. Sie verhindern jedoch ein übermäßiges Verschieben des Bremssattels 2 in Richtung Felgenseite, was zu einem Zerquetschen der Schutzkappen führen könnte.

Anstelle der Anschläge 80, 82 können auch die zuspannseitigen Flächen der Ansätze 72, 74 als Verschiebungsbegrenzungsanschlag für den Sattel 2 dienen. Dazu wirkt entsprechend der Darstellung in den Figuren 12 und 13 beispielsweise der Ansatz 72 (der bei dieser Ausführungsform hakenförmig ausgebildet ist) mit Anschlägen 72.1 und 72.2 zusammen, die an dem Sattel 2 ausgebildet sind. Der Anschlag 72.1 dient dabei der Begrenzung einer Verschiebung des Sattels 2 in Richtung auf die Zuspannseite. Demgegenüber dient der Anschlag 72.2 der Begrenzung einer Verschiebung des Sattels 2 in Richtung auf die Felgenseite. Entsprechende Extrempositionen des Sattels 2 sind in den Figuren 12 und 13 gezeigt. Die beiden Ansätze 72 und 74 sind bezüglich einer Symmetrielinie, die den Bremsenträger 12 in eine Einlaufseite und eine Auslaufseite teilt, symmetrisch angeordnet.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Bremsenträger für eine Scheibenbremse, mit
einer ersten Drehsicherungseinrichtung (32) zum Sichern eines Bremsbelages und/oder einer Druckplatte der Scheibenbremse gegen ein Mitdrehen mit der Bremsscheibe und
einer zweiten Drehsicherungseinrichtung (16) zum Sichern des Bremsenträgers (12) gegen ein Mitdrehen mit der Bremsscheibe,
**dadurch gekennzeichnet, daß**
die erste und die zweite Drehsicherungseinrichtung (32, 16) an einem Ansatz (22, 24) auf der bremsscheibenabgewandten Seite des Bremsenträgers (12) angeordnet sind.

2. Bremsenträger nach Anspruch 1, **dadurch gekennzeichnet, daß** die zweite Drehsicherungseinrichtung (16) ein Widerlager bildet, das parallel zur Radialrichtung und/oder zur Tangentialrichtung der Bremsscheibe wirkt.

3. Bremsenträger nach einem der vorangehenden Ansprüche, **gekennzeichnet durch** mindestens eine Ausnehmung (44, 46, 48, 50, 52, 54) für eine parallel zur Bremsscheibenachse ausgerichtete Befestigungsschraube (10).

4. Bremsenträger nach Anspruch 3, **dadurch gekennzeichnet, daß** die zweite Drehsicherungseinrichtung (16) gegen ein Drehen um eine Achse sichert, die außerhalb der Ausnehmung (44, 46, 48, 50, 52, 54) liegt.

5. Bremsenträger nach einem der vorangehenden Ansprüche, **dadurch gekennzeichnet, daß** die zweite Drehsicherungseinrichtung zwei L-förmig zueinander ausgerichtete Anschlagflächen (18, 28; 26, 30) aufweist.

6. Bremsenträger nach einem der vorangehenden Ansprüche, **dadurch gekennzeichnet, daß** die erste Drehsicherungseinrichtung (16) eine Führungsnut aufweist, die bezüglich einer Drehachse der Bremsscheibe schräg angestellt ist.

7. Bremsenträger nach einem der vorangehenden Ansprüche, **gekennzeichnet durch** mindestens einen Anschlag (76, 78, 80, 82) zur Begrenzung einer Verschiebung des Bremssattels in Axialrichtung der Bremsscheibe.

8. Bremsenträger nach Anspruch 7, mit einem Ansatz (72, 74) zur Begrenzung einer Verschiebung des Bremssattels (2) in beiden Richtungen entlang einer Drehachse der Bremsscheibe.

9. Bremsenträger nach Anspruch 7 oder 8, **gekennzeichnet durch** zwei Anschläge (76, 78; 80, 82), die symmetrisch zueinander liegen.

10. Scheibenbremse mit einem Bremsenträger nach einem der vorangehenden Ansprüche.

11. Scheibenbremse nach Anspruch 10, **dadurch gekennzeichnet, daß** sie eine Nutzfahrzeugbremse ist.

12. Scheibenbremse nach Anspruch 10 oder 11, **gekennzeichnet durch** einen Druck- und/oder Spannungssensor.

13. Scheibenbremse nach Anspruch 12, **dadurch gekennzeichnet, daß** der Sensor an einer Kontaktfläche zu einer Achsanordnung angebracht ist.
